# EUROPÄISCHE PATENTSCHRIFT

(11) **EP 2 303 553 B1**
(45) Veröffentlichungstag und Bekanntmachung des Hinweises auf die Patenterteilung: **07.11.2012**
(21) Anmeldenummer: 09765851.2
(22) Anmeldetag: 16.06.2009
(51) Int. Cl.: B29C 70/30, B29C 35/08, B29C 65/14

(54) **HERSTELLUNGSVERFAHREN FÜR BAUTEILE AUS FASERVERSTÄRKTEM VERBUNDWERKSTOFF MIT MIKROWELLEN**
MANUFACTURING METHOD FOR COMPONENTS MADE OF FIBER-REINFORCED COMPOSITE MATERIALS USING MICROWAVES
PROCÉDÉ DE FABRICATION PAR MICRO-ONDES DE STRUCTURES EN MATÉRIAU COMPOSITE RENFORCÉ PAR DES FIBRES

(30) Priorität: 18.06.2008 DE 102008029056
(43) Veröffentlichungstag der Anmeldung: 06.04.2011
(73) Patentinhaber: GKN Aerospace Services Limited, Isle of Wight, PO32 6RA (GB)
(72) Erfinder: MARENGO, Giovanni Antonio, East Cowes Isle of Wight PO32 6FE (GB); HERKNER, Thomas Mathias, 81241 München (DE)
(74) Vertreter: Rössler, Matthias
(86) Internationale Anmeldenummer: PCT/EP2009/057493
(87) Internationale Veröffentlichungsnummer: WO 2009/153271

(56) Entgegenhaltungen:
- WO-A1-00/62717
- WO-A1-2008/006835
- WO-A1-2009/049583
- DE-A1- 3 628 958
- DE-A1- 10 360 743
- FR-A1- 2 818 577
- GB-A- 599 555
- Daniel Gay: "Matériaux composites" 1997, HERMES , Paris , XP002544258 ISBN: 2-86601-586-X , Seite 191 Seite 191

## Beschreibung

Die vorliegende Erfindung betrifft ein Verfahren zur Herstellung eines Bauteils aufweisend zumindest eine Schicht mit Mikrowellen absorbierendem, faserverstärktem Verbundwerkstoff. Die Erfindung findet insbesondere Anwendung bei der Herstellung von strukturellen Komponenten eines Rumpfes und/oder einer äußeren Strömungsfläche eines Flugzeuges.

Im Hinblick auf die Bestrebungen, Flugzeuge zukünftig ökologisch angepasst sowie kostengünstig in der Herstellung und im Betrieb bereitzustellen und dennoch den strengsten Sicherheitsbestimmungen gerecht zu werden, wird zunehmend nach Möglichkeiten gesucht, die essentiellen Primärstrukturen (z. B. Flügel, Rumpfkomponenten, Gehäuse der Antriebsaggregate, etc.) nicht mehr aus Aluminium sondern mit faserverstärktem Verbundwerkstoff herzustellen. Mit dieser Leichtbau-Technik kann insbesondere das Gewicht der Flugzeuge deutlich reduziert werden. Bei der Herstellung solcher essentiellen Primärstrukturen ist zu berücksichtigen, dass diese beachtliche Ausmaße annehmen, so sind beispielsweise die Landeklappen Bauteile, die sich über mehrere Meter erstrecken. Diese Bauteile sind zudem hohen Belastungen im Betrieb ausgesetzt und stellen damit sicherheitskritische Bauteile dar, bei denen besondere Qualitätsanforderungen eingehalten werden müssen.

Solche faserverstärkten Verbundwerkstoffe umfassen im Allgemeinen zwei wesentliche Komponenten, nämlich einmal die Faser und andererseits eine die Faser umgebende Polymermatrix. Die Matrix umschließt die Fasern und wird durch eine thermische Behandlung gehärtet (Polymerisation), so dass eine dreidimensionale Vernetzung erfolgt. Mit dieser Polymerisation wird erreicht, dass die Fasern fest miteinander verbunden sind und so Kräfte, nämlich überwiegend über Schubspannungen, in die Fasern eingeleitet werden können. Als Faser kommen neben Kohlefaser gegebenenfalls auch Glasfasern in Betracht. Kohlefasern, die heutzutage noch vergleichsweise teuer sind, bestehen regelmäßig zu mindestens 90 Gew.-% aus Kohlenstoff. Der Faserdurchmesser beträgt beispielsweise 4,5 bis 8 µm (Mikrometer). Die Eigenschaften solcher Kohlefaser sind anisotrop. Im Gegensatz dazu besitzen Glasfasern eine amorphe Struktur und isotrope Eigenschaften. Sie bestehen überwiegend aus Siliciumoxid, wobei gegebenenfalls weitere Oxide beigemengt sein können. Während die Glasfasern relativ günstig sind, zeichnen sich die Kohlefasern durch ihre hohe Festigkeit und Steifigkeit aus.

Gerade im Flugzeugbau wird die sogenannte Prepreg-Technik angesetzt. Bei dieser Technologie werden z. B. vorimprägnierte Gewebe oder andere Faserformen (Preformling) in Kunstharze getränkt und lediglich bis zu einer leichten Verfestigung (Gelierung) thermisch behandelt, so dass sie lagenweise handhabbar sind. Ein solches Prepreg-Material haftet ein wenig und ist somit gut in entsprechende Formwerkzeugen bzw. schichtweise aufeinander anzuordnen, bis die gewünschte Bauteil-Form ausgebildet ist. Sind die gewünschten Schichten des Prepreg-Materials angeordnet, können sie (thermisch) ausgehärtet werden. Zum Aushärten dieser Prepreg-Bauteile kommen heutzutage sogenannte Autoklaven zum Einsatz, also Öfen, die gegebenenfalls mit Überdruck (bis zu 10 bar) über viele Stunden beheizt werden müssen, um eine vollständige Aushärtung der Bauteile zu erreichen.

Aus der DE 10 2005 050 528 A1 ist zudem ein Mikrowellen-Autoklav bekannt, mit dem die Herstellung von Faserverbundbauteilen mittels einer Mikrowellenstrahlung vorgeschlagen wird. Die dort vorgeschlagene Vorrichtung ermöglicht, eine Mikrowellenstrahlung in den Druckraum des Autoklaven einzukoppeln. Bei der Anregung der Prepreg-Materialien mit Mikrowellen besteht der Vorteil, dass es nicht erforderlich ist, die im Autoklaven befindliche Luft bzw. das darin befindliche Schutzgas zu erwärmen, das aufgrund der Größe der Bauteile mit einem beachtlichen Volumen vorliegt. Durch die Verwendung der Mikrowellen-Technologie kann das auszuhärtende Material selbst direkt aufgewärmt werden, der restliche Umgebungsbereich bleibt demnach relativ kalt. Bei der Erwärmung des Prepreg-Materials mit Mikrowellen können je nach dem eingesetzten Material folgende Wirkmechanismen einsetzen: eine dielektrische Erwärmung und eine ohm'sche Erwärmung. Langkettige Kohlenwasserstoffmoleküle (wie z. B. in Epoxidharz) sind Dipole (weisen also eine unregelmäßige Ladungsverteilung auf) und werden in dem durch die Mikrowellen erzeugten elektromagnetischen Feld zu einer hochfrequenten Schwingung angeregt. Diese kinetische Energie der Dipole wird dann durch interne Reibung in Wärme umgesetzt, die direkt im Material entsteht (dielektrische Erwärmung). Außerdem ist auch möglich, dass durch Induktion Wirbelströme entstehen, so dass der elektrische Widerstand des Materials schließlich eine Temperaturerhöhung bedingt (ohm'sche Erwärmung). Somit kann das Material beispielsweise auf Temperaturen oberhalb von 130°C oder sogar oberhalb von 160°C erwärmt werden, eine Temperatur, bei der regelmäßig die Polymerisation bzw. Härtung bei den Prepreg-Materialien einsetzt.

Ebenso ist der aus DE 103 29 411 A1 beschriebene Mikrowellenresonator geeignet, um eine solche thermische Behandlung durchzuführen. Dieser Mikrowellenresonator wird in der Regel ohne Überdruck betrieben. Er kann aber ggf. auch in einen Druckkessel (Autoklav) integriert werden.

Dokument DE 103 60 743 beschreibt auch eine Behandlung durch Mikrowellen.

Problematisch bei dem Härtungsprozess für solche großen Bauteile, wie sie im Flugzeugbau Verwendung finden, ist, dass gegebenenfalls komplexere Geometrien der Komponenten zusätzliche Fügeprozesse solcher faserverstärkter Verbundwerkstoffe erfordern. Hierzu war es üblich, gehärtete Bauteile miteinander fügetechnisch unter Einsatz eines Verbundmittels zu verbinden. Hierzu wurden die gehärteten Bauteile gegebenenfalls oberflächenbehandelt, wie beispielsweise geschliffen und/oder gereinigt. Dann wurde unter Umständen ein Haftvermittler auf die behandelten Oberflächen aufgetragen. Ein Kleber wurde nachfolgend appliziert, mit dem die miteinander zu verbindenden Bauteile dann fixiert wurden. Nicht nur, dass dieses Verfahren eine relativ umständliche Handhabung der gro-βen Bauteile erforderlich macht, die Vorbehandlung der Bauteile sowie der Fügeprozess selbst sind zudem sehr exakt auszuführen, weil hier immer wieder Fehler zu einer Bauteilschwächung führen, die gerade im Flugzeugbau nicht zu verantworten ist.

Hiervon ausgehend ist es Aufgabe der vorliegenden Erfindung, die mit Bezug auf den Stand der Technik geschilderten Probleme zumindest teilweise zu lösen. Insbesondere soll ein Verfahren angegeben werden, mit dem die Herstellung von Flugzeug-Bauteilen kostengünstig, variabel und mit gleichmäßigen Bauteileigenschaften über den gesamten Querschnitt erreicht werden können.

Diese Aufgaben werden gelöst mit einem Verfahren gemäß den Merkmalen des Patentanspruchs 1. Weitere vorteilhafte Ausgestaltungen und Einsatzgebiete werden in den abhängig formulierten Patentansprüchen angegeben. Es ist darauf hinzuweisen, dass die in den abhängig formulierten Patentansprüchen angegebenen Merkmale in technologisch sinnvoller Weise beliebig miteinander kombiniert werden können und weitere Ausgestaltungen der Erfindung aufzeigen. Die Beschreibung, insbesondere im Zusammenhang mit den Figuren, führt weitere Ausführungsvarianten der Erfindung an.

Das erfindungsgemäße Verfahren zur Herstellung eines Bauteils aufweisend mindestens eine Schicht mit Mikrowellen adsorbierenden, faserverstärktem Verbundwerkstoff umfasst zumindest die folgenden Schritte:
a) Anordnen der mindestens einen Schicht mit einer Gestalt;
b) Behandeln eines ersten Oberflächenabschnittes der wenigstens einen Schicht mit Mikrowellen, wobei Mittel zur Temperaturbegrenzung der wenigstens einen Schicht zumindest zeitweise mit wenigstens einem benachbarten zweiten Oberflächenabschnitt zusammenwirken.

Die faserverstärkten Verbundwerkstoffe, die hier eingesetzt werden, können Mikrowellen absorbieren. Damit ist insbesondere gemeint, dass diese mit Mikrostrahlen erwärmt werden können, also für eine dielektrische und/oder eine Ohm'sche Erwärmung geeignet sind.

Bei dem faserverstärktem Verbundwerkstoff handelt es sich insbesondere um einen kohlefaserverstärkten Verbundwerkstoff. Die Kohlefasern sind bevorzugt als im Ausgangszustand endlose Langfasern ausgeführt, die in den Bauteilen schichtweise, mit unterschiedlicher Ausrichtung der Faserlängsrichtung angeordnet sind. Als Harz kommt insbesondere eines der folgenden in Betracht: Epoxidharz, Phenolharz, Bismaleimidharz oder Polyesterharz.

Zur Herstellung des Bauteils kann nun eine solche Schicht zum Einsatz gelangen, es ist aber auch möglich, wenigstens bereichsweise mehrere solcher Schichten aufeinander zu positionieren, um gegebenenfalls variable Dicken des Bauteils generieren zu können. Eine "Schicht" stellt dabei insbesondere eine Lage eines Prepreg-Materials dar.

Gemäß Schritt a) werden nun die Schichten mit der gewünschten Gestalt angeordnet. Handelt es sich um ein flächiges Bauteil, so sind diese gegebenenfalls mit einer ebenen Gestalt anzuordnen. Für den Fall, dass eine gebogene Gestalt gewünscht ist, sind die Schichten in entsprechender Weise anzuordnen und zu fixieren. Insbesondere betrifft also die Gestalt, mit der die Schichten in Schritt a) angeordnet sind, im Wesentlichen der letztendlichen Form des gewünschten Bauteils.

In Schritt b) wird nun eine lokal begrenzte Behandlung eines ersten Oberflächenabschnitts mit Mikrowellen vorgeschlagen. Zu diesem Zweck ist es möglich, dass das gesamte Bauteil mit Mikrowellen bestrahlt wird, gegebenenfalls kann aber auch eine konzentrierte Mikrowellen-Behandlung im Bereich des ersten Oberflächenabschnittes bzw. der näheren Umgebung vorgenommen werden. Insbesondere sind mittels der angesprochenen Erwärmung hier Temperaturen oberhalb von zumindest 80°C, zumindest 130°C oder sogar oberhalb von 160°C zu erreichen, um eine Polymerisation des Verbundwerkstoffes sicher zu bewirken.

Benachbart zu diesem ersten Oberflächenabschnitt sind nun Mittel zur Temperaturbegrenzung der wenigstens einen Schicht vorgesehen. Diese Mittel können während der gesamten Mikrowellen-Behandlung aktiv sein, dies ist aber nicht zwingend erforderlich. Diese Mittel zur Temperaturbegrenzung wirken so mit dem benachbarten zweiten Oberflächenabschnitt zusammen, dass dort eine Temperatur von 50°C nicht überschritten wird.

Das führt letztendlich dazu, dass nach der Durchführung des Schrittes b) im Bereich des ersten Oberflächenabschnittes ein deutlich höherer Vernetzungsgrad bezüglich des faserverstärkten Verbundwerkstoffs festzustellen ist als im zweiten Oberflächenabschnitt. Der Vernetzungsgrad ist ein Parameter, der die Volumenanteile der nicht-polymerisierten Materialkomponenten zu den vollständig polymerisierten Materialkomponenten in dem betrachteten Abschnitt des Verbundwerkstoffs beschreibt.

Während also beispielsweise im ersten Oberflächenabschnitt im Mittel ein (erster) Vernetzungsgrad von zumindest 80% vorliegt, liegt im Bereich des zweiten Oberflächenabschnittes ein (zweiter) Vernetzungsgrad von maximal 20% oder sogar von maximal 10% oder sogar von maximal 4% vor.

Ganz besonders bevorzugt ist dabei, dass der erste Vernetzungsgrad in den Bereich des ersten Oberflächenabschnitts und der zweite Vernetzungsgrad im Bereich des zweiten Oberflächenabschnitts in einem sehr schmalen Übergangsbereich erreicht wird, beispielsweise in einem Übergangsbereich von maximal 30 mm oder sogar von maximal 10 mm oder sogar von maximal 5 mm. Wesentliche Eigenschaften des ersten Oberflächenabschnitts nach der ersten Behandlung nach Schritt b) ist eine ausreichende Festigkeit bzw. Vernetzung für die weitere Handhabung und Behandlung des Bauteils. Diese erzielbare Vernetzung ist vom jeweiligen Matrixtyp, der Art des Faserhalbzeugs, seiner Orientierung und der Schicht- bzw. Bauteildicke abzuleiten oder zu ermitteln. Der nach b) behandelte erste Oberflächenabschnitt soll so beschaffen sein, dass die Weiterverarbeitung zumindest teilweise wie bei einem konventionell hergestellten Bauteil möglich ist.

Im Ergebnis liegt also bevorzugt ein Bauteil vor, das im Bereich des ersten Oberflächenabschnitts im Wesentlichen ausgehärtet ist, während das Bauteil im benachbarten zweiten Oberflächenabschnitt noch formbar bzw. weiter mittels Mikrowellen härtbar ist. Der endgültige Polymerisationsgrad bzw. Vernetzungsgrad kann nach der hier beschriebenen Behandlung auch über bekannte, konventionelle Aushärtemethoden, wie z. B. Autoklav oder Umluftofen erfolgen. Dies gilt für alle Bereiche eines Bauteils, unabhängig von dem an jeder Stelle erreichten Polymerisationsgrad.

Nur der Vollständigkeit halber sei noch darauf hingewiesen, dass nach Durchführung des Schrittes b) mehrere zweite (nicht (vollständig) gehärtete) Oberflächenabschnitte vorliegen können. Klar ist auch, dass mit dem Hinweis auf die Oberflächenabschnitte von der Betrachtung ausgegangen wird, dass die Mikrowellen von einer Seite des Bauteils einwirken aber soweit in den Verbundwerkstoff eindringen können, dass die Vernetzungsgrade über die gesamte Dicke des Bauteils bzw. die mindestens eine Schicht gleichermaßen vorliegt.

Es ist auch darauf hinzuweisen, dass die Einleitung der Mikrowellen einfach über Luft oder ein anderes Gas eingeleitet werden können, so dass insbesondere keine flüssigen Trägermedien (wie z. B. Wasser) um das Bauteil bereitgestellt werden müssen.

Mit dem hier beschriebenen Verfahren wird also für konkret vorbestimmbare zweite Oberflächenabschnitte die Einwirkung der Mikrowellen so begrenzt, dass kein Aushärten bzw. keine Polymerisation (erheblichen Umfangs) erfolgt. Dieser zweite Oberflächenabschnitt kann also nach Schritt b) weiter thermisch behandelt werden, so dass sich der Vernetzungsgrad im zweiten Oberflächenabschnitt verändert.

Gemäß einer Weiterbildung des Verfahrens wird vorgeschlagen, dass in Schritt b) als Mittel zur Temperaturbegrenzung zumindest ein Wärmeableitelement mit dem zweiten Oberflächenabschnitt in Kontakt gebracht wird. Ein solches Wärmeableitelement umfasst beispielsweise ein (plattenförmiges) Wärmeableitelement aus Aluminium oder einem Material mit ähnlich guten Wärmeleitungseigenschaften. Ein solches Wärmeableitelement kann beispielsweise (direkt) in berührendem Kontakt zum zweiten Oberflächenabschnitt positioniert werden. Das Wärmeableitelement hat insbesondere die Aufgabe, die Wärmeleitung von dem ersten Oberflächenabschnitt hin zum zweiten Oberflächenabschnitt zu reduzieren bzw. zu begrenzen. Dazu kann das Wärmeableitelement auch als Kühlaggregat ausgestattet sein, also selbst eine (aktive) Kühlung aufweisen. Die Kühlung kann regelbar und/oder permanent verfügbar sein.

Darüber hinaus wird auch vorgeschlagen, dass in Schritt b) als Mittel zur Temperaturbegrenzung zumindest ein Kühlfluid mit dem zweiten Oberflächenabschnitt in Kontakt gebracht wird. Ganz besonders bevorzugt ist hierbei, dass ein Gas und/oder eine Flüssigkeit mit einer Temperatur deutlich unterhalb von 100 °C, insbesondere unterhalb von 40 °C und gegebenenfalls sogar unterhalb von 20 °C direkt und/oder mittelbar mit den zweiten Oberflächenabschnitten in Kontakt gebracht wird. Ganz besonders bevorzugt ist, dass kalte Luft mit dem zweiten Oberflächenabschnitt in Kontakt gebracht wird. Auch das Kühlfluid hat die Funktion, die gegebenenfalls im Bereich des zweiten Oberflächenabschnitts entstehende Wärme abzuführen und somit eine Vernetzung des faserverstärkten Verbundwerkstoffs zu verhindern bzw. zu begrenzen.

Gemäß einer Weiterbildung des erfindungsgemäßen Verfahrens wird vorgeschlagen, in Schritt b) als Mittel zur Temperaturbegrenzung zumindest eine Mikrowellen-Abschirmung an dem zweiten Oberflächenabschnitt zu positionieren. Eine solche Mikrowellen-Abschirmung kann insbesondere mit einem plattenförmigen Element bereitgestellt werden, das für Mikrowellen undurchdringbar ist. Metallische oder metallisch bedampfte Folien, welche Mikrowellenstrahlen reflektieren, sind als flexible Auflage bei entsprechenden Formgebungen zu bevorzugen, sofern keine beidseitig formgebenden Oberflächenwerkzeuge vorgesehen sind. Für die Anwendung während einer Behandlung bei Schritt b) mit gleichzeitiger Entlüftung des Bauteils im zweiten Oberflächenabschnitt eignen sich auch metallische Gewebe bzw. Maschenware (z. B. Netze), wobei die konkrete Ausgestaltung (z. B. Maschenweite) an die eingesetzte Mikrowellenfrequenz angepasst sein muss, um die geforderte Abschirmung zu erreichen.

Indem nun die Mikrowellen-Abschirmung zwischen der Mikrowellen-Quellen und dem zweiten Oberflächenabschnitt positioniert wird, kann die Mikrowellenstrahlung den zweiten Oberflächenabschnitt nicht erreichen und somit dort nicht zu einer Temperaturerhöhung und Polymerisation führen. Auch auf diese Weise wird die Polymerisation in gewünschten Umfang unterbunden. Eine solche Mikrowellen-Abschirmung kann gegebenenfalls auch direkt in Kontakt mit dem zweiten Oberflächenabschnitt gebracht werden, so dass dies zusätzlich als Wärmeableitelement fungiert.

Einer Weiterbildung des Verfahrens zur Folge werden die Schritte a) und b) an einer Mehrzahl von Bauteilen durchgeführt und die Bauteile gemäß zumindest den folgenden Schritten weiter behandelt:
c) Positionieren einer Mehrzahl von Bauteilen so zueinander, dass jeweils zweite Oberflächenabschnitte wenigstens teilweise zumindest einen Überlappungsbereich bilden,
d) Behandeln des zumindest einen Überlappungsbereichs mit Mikrowellen.

Dieses Verfahren betrifft nun insbesondere das Fügen einer Mehrzahl solcher teilweise gehärteten Bauteile bzw. solcher teilweise gehärteten Bauteilen mit unbehandelten Bauteilen oder Schichten. Dabei werden in Schritt c) die Bauteile so zueinander ausgerichtet bzw. aufeinander gelegt, dass die zweiten Oberflächenabschnitte (direkt) aneinander anliegen. Insbesondere kann hier auf die herkömmlich erforderliche Vorbereitung der Oberflächenabschnitte bzw. die Applizierung eines zusätzlichen Klebers verzichtet werden. Nachdem nunmehr die zweiten Oberflächenabschnitte aneinander anliegen, kann eine erneute Behandlung der Bauteile mittels Mikrowellen stattfinden. Gegebenenfalls ist energetisch sinnvoll, nur den Überlappungsbereich gezielt mit Mikrowellen zu behandeln, dies ist aber nicht zwingend erforderlich, so dass auch bereits gehärtete erste Oberflächenabschnitte behandelt werden bzw. der Vernetzungsgrad dort weiter angehoben werden kann. Im Ergebnis kann so aber eine Komponente aus mehreren Bauteilen gefertigt werden, die in allen Querschnitten den gleichen Vernetzungsgrad aufweist, wobei insbesondere auch bei komplexen Formgeometrien homogene Materialeigenschaften gewährleistet werden können.

In diesem Zusammenhang wird auch als vorteilhaft angesehen, dass zumindest zwischen den Schritten b) und c) oder während Schritt c) eine Umformung wenigstens eines der Bauteile im Bereich eines zweiten Oberflächenabschnitts erfolgt. Die Umformung führt insbesondere zu einer anderen Gestalt des Bauteils. Dies ermöglicht beispielsweise, dass die Bauteile zunächst in einer bestimmten Gestalt hergestellt werden und dann für das konkrete Bauteil angepasst werden. Somit können die Fertigungskosten gerade zur Durchführung der Schritte a) und b) deutlich reduziert werden. Bevorzugt ist, dass die Umformung während des Schrittes c) stattfindet, wobei die Bauteile gegebenenfalls durch entsprechende Halterungen zueinander fixiert werden. Jedenfalls führt auch diese Umformung dazu, dass die überlappenden zweiten Oberflächenabschnitte sicher und ausgerichtet zueinander in Kontakt sind.

Darüber hinaus wird auch als vorteilhaft angesehen, dass in Schritt d) eine direkte stoffschlüssige Verbindung der Mehrzahl von Bauteilen in dem Überlappungsbereich ausgebildet wird. Das heißt mit anderen Worten insbesondere, dass keine Materialübergänge, Festigkeitsunterschiede und/oder signifikante Unterschiede im Vernetzungsgrad im Bereich der stoffschlüssigen Verbindung nach Schritt d) identifizierbar sind.

Ganz besonders bevorzugt dient das hier vorgestellte Verfahren zur Herstellung einer Komponente eines Rumpfes oder einer äußeren Strömungsfläche eines Flugzeuges, das ein solches Bauteil umfasst. Die Komponente betrifft insbesondere eine aus der folgenden Gruppe: Landeklappe, Flap track beam, Nasenteile, Seitenleitwerk, Höhenleitwerk, Spoiler, Dachelemente, Düsengehäuse, Ausleger, Strukturrahmen. Es ist darauf hinzuweisen, dass das "Flugzeug" hier nur als eine bevorzugte Anwendung angegeben ist, andere Anwendungsgebiete liegen auch bei anderen Fluggeräten, wie z. B. Hubschraubern.

Die Wirkung des hier beschriebenen Verfahrens soll anhand des folgenden Beispiels veranschaulicht werden:

### Ausgangssituation:

- Prepeg-Material:: Unidirektionales 12K HTS Kohlefaserprepreg mit Epoxidharzmatrix und einem Flächengewicht von 145 Gramm pro Quadratmeter bei einem Harzgehalt von 35 %
- Schichtdicke:: 0,145 mm
- Anzahl der Schichten:: 16
- sonstige Folien:: Abreißgewebe, Trennfolie, Belüftungsvlies, Vakuumfolie
- Temperatur vor Beginn:: 25°C

### Schritt b):

- Mittel zur Temperaturbegrenzung:: Aluminiumplatte
- Positionierung:: Überdeckung der halben Prepregplatte
- Kühlfluid:: Druckluft
- Mikrowellenfrequenz:: 2,45 GHz
- Mikrowellenleistung:: ca. 10 kW
- Behandlungsdauer:: ca. 3 Stunden 45 Minuten
- Temperatur im ersten Oberflächenabschnitt:: 135°C
- Temperatur im zweiten Oberflächenabschnitt:: 42°C

### Ergebnis:

- erster Vernetzungsgrad:: über 80%
- zweiter Vernetzungsgrad:: unter 20%
- Übergangsbereich:: kleiner 18 mm

Die Erfindung sowie das technische Umfeld werden nachfolgend anhand der Figuren weiter erläutert. Es ist darauf hinzuweisen, dass die Figuren besonders bevorzugte Ausführungsvarianten der Erfindung zeigen, diese aber nicht darauf beschränkt ist. Es zeigen schematisch:
- Figur 1:: einen Aufbau zur Durchführung des erfindungsgemäßen Verfahrens,
- Figur 2:: ein Flugzeug, und
- Figuren 3 bis 6:: einzelne Verfahrensschritte gemäß einer Ausführungsvariante des erfindungsgemäßen Verfahrens.

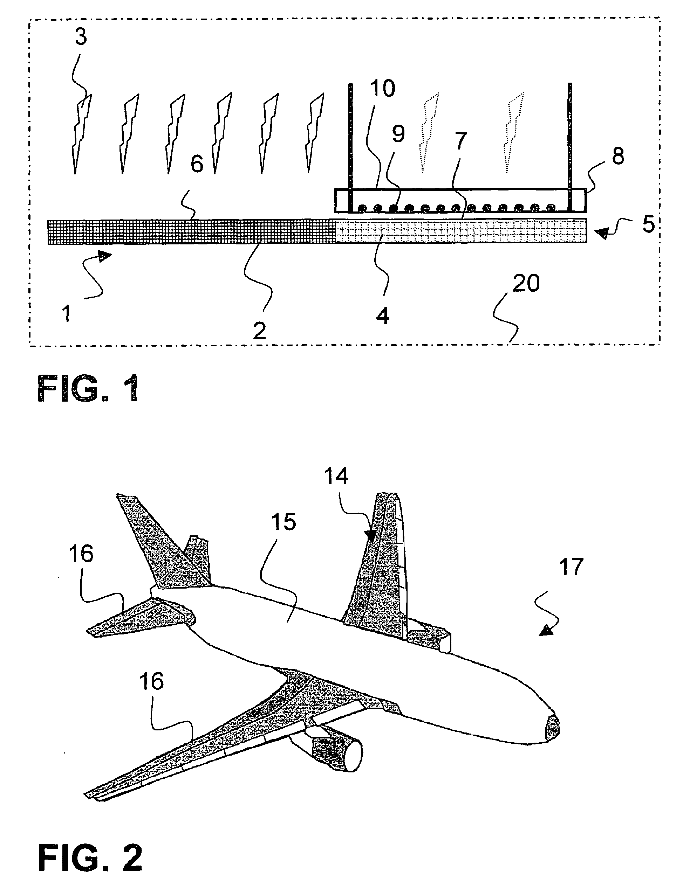

In Figur 1 ist schematisch eine Vorrichtung 20 zur Durchführung des erfindungsgemäß beschriebenen Verfahrens dargestellt. Die Vorrichtung 20 kann beispielsweise einen herkömmlichen Autoklaven betreffen, der mit einer Mehrzahl von Mikrowellen-Heizquellen ausgebildet ist, die Mikrowellenquellen umfassen. Diese Mikrowellenquellen strahlen beispielsweise Mikrowellen mit einer Frequenz im Bereich von 30 Megahertz bis 30 Gigahertz ab, typische Frequenzen liegen beispielsweise bei 0,913 oder 2,45 oder 5,8 Gigahertz. Insbesondere die Frequenz von 2,45 Gigahertz können mit Magnetrons nach dem derzeitigen Stand der Technik kostengünstig zur Verfügung gestellt werden, wobei die Mikrowellenleistung gerade zur Einkopplung der Energien in die Matrix von Faserverbundwerkstoffen geeignet ist. Die Vorrichtung 20 kann grundsätzlich auch unter erhöhtem Umgebungsdruck arbeiten.

Zentral dargestellt ist ein erstes Bauteil 1, das aus einer einzelnen ersten Schicht 2 aus Verbundwerkstoff 4 hergestellt ist und eine flächige Gestalt 5 aufweist. Hierbei handelt es sich insbesondere um ein sogenanntes Prepreg-Material, bei dem Kohlefasern in einer Epoxyharz-Matrix vorliegen.

Das erste Bauteil 1 weist einen ersten Oberflächenabschnitt 6 und zweiten Oberflächenabschnitt 7 auf, die benachbart zueinander angeordnet sind. In der Darstellung von Figur 1 werden die Mikrowellen 3 von oben auf das erste Bauteil 1 einwirken, so dass nun auch oberhalb des zweiten Oberflächenabschnitts 7 (gegebenenfalls auch unterhalb) ein Wärmeableitelement 8 vorgesehen ist. Das Wärmeableitelement 8 weist zudem ein Kühlsystem auf, mit dem Kühlfluid 9 hin zum zweiten Oberflächenabschnitt 7 geleitet werden kann. Zusätzlich bewirkt das Wärmeableitelement 8, beispielsweise nach Art einer Aluminiumplatte, dass die Mikrowellen 3 nicht den zweiten Oberflächenabschnitt 7 erreichen können, also wirkt es zusätzlich nach Art einer Mikrowellen-Abschirmung 10. Bei der Durchführung der Behandlung des ersten Bauteils 1 mit Mikrowellen 3 härtet der erste Oberflächenabschnitt 6 bis zu einem gewünschten Vernetzungsgrad aus. Der benachbart dazu angeordnete zweite Oberflächenabschnitt 7 erreicht diesen Vernetzungsgrad aufgrund der vorstehend beschriebenen Maßnahmen nicht, sondern bleibt praktisch (nahezu) ohne Anstieg des Vernetzungsgrades.

Es sei darauf hingewiesen, dass gerade für den Fall, dass die Vorrichtung 20 unter Druck betrieben wird, das erste Bauteil 1 mit Folie umgeben sein kann bzw. mit Mikroschichten, die beispielsweise die Entformbarkeit von einer Bauteil-Aufnahme (hier nicht dargestellt) gewährleisten sollen. Solche Mikroschichten betreffen beispielsweise Vakuumfolien (Vakuumfolie), thermische Isolierungen, Trennfolien und dergleichen. Dabei stellt die Vakuumfolie die äußere Umgebungshülle für das erste Bauteil 1 dar, so dass eine entsprechende Anwendung des erfindungsgemäßen Verfahrens für einen solchen Aufbau mit umfasst werden soll und nicht aus dem Gegenstand der Erfindung heraus führt.

Figur 2 veranschaulicht einmal Komponenten 14 des Rumpfes oder einer Strömungsfläche 16 eines Flugzeuges 17, die mit Bauteilen nach dem hier erfindungsgemäß beschriebenen Verfahren hergestellt werden können. Es ist zu erkennen, dass bereits großflächige, primäre Strukturbauteile eines Flugzeugs 17 mit dem vorgeschlagenen Verfahren hergestellt werden können, wobei gleichermaßen das Gewicht des Flugzeugs 17 deutlich reduziert werden kann. Der damit einhergehende geringere Treibstoffverbrauch und/oder die höhere Zuladung sind wesentliche Vorteile dieser Erfindung.

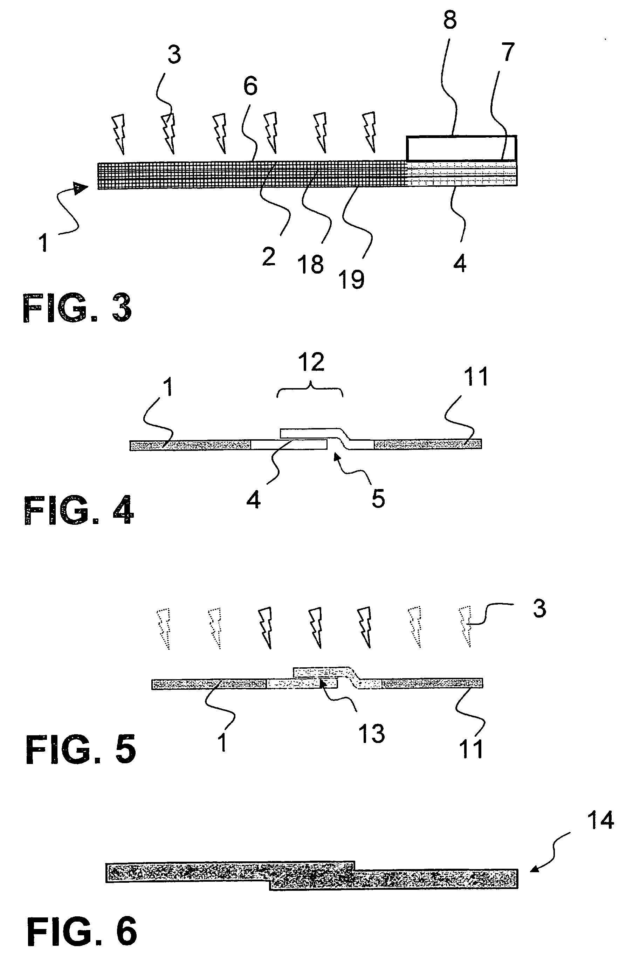

Die Figuren 3 bis 6 veranschaulichen nun unterschiedliche Schritte einer Ausführungsvariante des erfindungsgemäßen Verfahrens. In Figur 3 ist erneut ein erstes Bauteil 1 schematisch dargestellt, dass hier aber mehrschichtig ausgebildet ist, also mit einer ersten Schicht 2, einer zweiten Schicht 18 und einer dritten Schicht 19. Die Schichten können dabei verschiedene und/oder gleiche Lagen eines Prepreg-Materials darstellen. Auch in diesem Fall ist eine Bestrahlung des Mikrowellen adsorbierenden, faserverstärkten Verbundwerkstoffs 4 mit Mikrowellen 3 zum Härten des ersten Oberflächenabschnitts 6 vorgeschlagen. Im Bereich des (kleineren) zweiten Oberflächenabschnitts 7 ist eine Wärmeableitelement 8 in direktem Kontakt, so dass gegebenenfalls dort entstehende Wärme vom ersten Bauteil 1 entfernt wird und damit ein Härteprozess begrenzt bzw. unterbunden wird.

Figur 4 zeigt nun die Anordnung von zwei Bauteilen zueinander, nämlich einem ersten Bauteil 1 und einem zweiten Bauteil 11. Beide Bauteile weisen (hier farblich weiß abgehoben dargestellt) zweite Oberflächenabschnitte 7 auf, die noch verformbar und nicht gehärtet sind. Die Bauteile werden nun so teilweise aufeinander angeordnet, dass ein Überlappungsbereich 12 mit dem noch nicht gehärteten Verbundwerkstoff ausgebildet ist. Bezüglich des rechts dargestellten zweiten Bauteils 11 geht gleichermaßen eine Änderung der Gestalt 5 einher.

Die so vorbereitete Anordnung des ersten Bauteils und des zweiten Bauteils 11 wird mit Mikrowellen 3 behandelt, wobei dies gegebenenfalls auch gezielt vorgenommen werden kann, wie in Figur 5 durch die außen nur gestrichelt angedeuteten Mikrowellen 3 veranschaulicht. Im Überlappungsbereich 12 bildet sich dabei eine direkte stoffschlüssige Verbindung 13 aus.

Im Ergebnis ist eine Komponente 14 letztendlich hergestellt, die gleiche Materialeigenschaften über den gesamten Querschnitt aufweist, wie dies durch die gleichmäßige Farbgebung in Figur 6 veranschaulicht ist.

### Bezugszeichenliste

- 1: erstes Bauteil
- 2: erste Schicht
- 3: Mikrowellen
- 4: Verbundwerkstoff
- 5: Gestalt
- 6: erster Oberflächenabschnitt
- 7: zweiter Oberflächenabschnitt
- 8: Wärmeableitelement
- 9: Kühlfluid
- 10: Mikrowellen-Abschirmung
- 11: zweites Bauteil
- 12: Überlappungsbereich
- 13: Verbindung
- 14: Komponente
- 15: Rumpf
- 16: Strömungsfläche
- 17: Flugzeug
- 18: zweite Schicht
- 19: dritte Schicht
- 20: Vorrichtung

## Patentansprüche

1. Verfahren zur Herstellung eines Bauteiles (1) aufweisend mindestens eine Schicht (2) mit Mikrowellen (3) adsorbierendem, faserverstärktem Verbundwerkstoff (4) umfassend zumindest die folgenden Schritte:
a) Anordnen der mindestens einen Schicht (2) mit einer Gestalt (5);
b) Behandeln eines ersten Oberflächenabschnittes (6) der wenigstens einen Schicht (2) mit Mikrowellen (3), wobei Mittel zur Temperaturbegrenzung der wenigstens einen Schicht (2) zumindest zeitweise mit wenigstens einem benachbarten zweiten Oberflächenabschnitt (7) zusammenwirken, wobei als Mittel zur Temperaturbegrenzung zumindest ein Wärmeableitelement (8) mit dem zweiten Oberflächenabschnitt (7) in Kontakt gebracht wird,
so dass im ersten Oberflächenabschnitt (6) ein höherer Vernetzunggrad als im zweiten Oberflächenabschnitt (7) erzeugt wird.

2. Verfahren nach Patentanspruch 1 oder 2, bei dem in Schritt b) als Mittel zur Temperaturbegrenzung zumindest ein Kühlfluid (9) mit dem zweiten Oberflächenabschnitt (7) in Kontakt gebracht wird.

3. Verfahren nach einem der vorhergehenden Patentansprüche, bei dem in Schritt b) als Mittel zur Temperaturbegrenzung zumindest eine Mikrowellen-Abschirmung (10) an dem zweiten Oberflächenabschnitt (7) positioniert wird.

4. Verfahren nach einem der vorhergehenden Patentansprüche, bei dem die Schritte a) und b) für eine Mehrzahl von Bauteilen (1, 11) durchgeführt werden und die Bauteile (1, 11) gemäß zumindest den folgenden Schritten weiter behandelt werden:
c) Positionieren einer Mehrzahl von Bauteilen (1, 11) so zueinander, dass jeweils zweite Oberflächenabschnitte (7) wenigstens teilweise zumindest einen Überlappungsbereich (12) bilden,
d) Behandeln des zumindest einen Überlappungsbereichs (12) mit Mikrowellen (3).

5. Verfahren nach Patentanspruch 4, bei dem zumindest zwischen den Schritten b) und c) oder während Schritt c) eine Umformung wenigstens eines der Bauteile (1, 11) im Bereich eines zweiten Oberflächenabschnitts (7) erfolgt.

6. Verfahren nach Patentanspruch 4 oder 5, bei dem in Schritt d) eine direkte stoffschlüssige Verbindung (13) der Mehrzahl von Bauteilen (1, 11) in dem Überlappungsbereich (12) ausgebildet wird.

## Claims

1. Method for manufacturing a component (1) having at least one layer (2) comprising a fibre-reinforced composite material (4) that absorbs microwaves (3), said method comprising at least the following steps:
a) arranging the at least one layer (2) in a shape (5);
b) treating a first surface portion (6) of the at least one layer (2) with microwaves (3), wherein means for limiting the temperature of the at least one layer (2) interact at least for a time with at least one adjacent second surface portion (7), wherein at least one heat diverging element (8) is brought into contact with the second surface portion (7) as means for limiting the temperature,
so that a higher degree of crosslinking is produced in the first surface portion (6) than in the second surface portion (7).

2. Method according to Patent Claim 1, in which, in step b), at least one cooling fluid (9) is brought into contact with the second surface portion (7) as the means for limiting the temperature.

3. Method according to one of the preceding patent claims, in which, in step b), at least one microwave shielding (10) is positioned on the second surface portion (7) as the means for limiting the temperature.

4. Method according to one of the preceding patent claims, in which steps a) and b) are carried out for a plurality of components (1, 11) and the components (1, 11) are further treated according to at least the following steps:
c) positioning a plurality of components (1, 11) in relation to one another in such a way that in each case second surface portions (7) at least partially form at least one overlapping region (12),
d) treating the at least one overlapping region (12) with microwaves (3).

5. Method according to Patent Claim 4, in which, at least between steps b) and c) or during step c), a re-forming of at least one of the components (1, 11) is performed in the region of a second surface portion (7).

6. Method according to Patent Claim 4 or 5, in which, in step d), a direct material bond (13) of the plurality of components (1, 11) is formed in the overlapping region (12).

## Revendications

1. Procédé de fabrication d'un composant (1) qui présente au moins une couche (2) dotée d'un matériau composite (4) absorbant les micro-ondes (3) et renforcé de fibres, le procédé comportant au moins les étapes suivantes :
a) placement d'au moins une couche (2) de configuration (5),
b) traitement d'une première partie (6) de la surface de la ou des couches (2) par des micro-ondes (3), des moyens de limitation de la température de la ou des couches (2) coopérant au moins une partie du temps avec au moins une deuxième partie (7), voisine, de la surface, au moins un élément (8) évacuant la chaleur étant mis en contact avec la deuxième partie (7) de la surface comme moyen de limitation de la température,
de manière à former dans la première partie (6) de la surface un taux de réticulation plus élevé que dans la deuxième partie (7) de la surface.

2. Procédé selon la revendication 1, dans lequel au cours de l'étape b), au moins un fluide de refroidissement (9) servant de moyen de limitation de la température est mis en contact avec la deuxième partie (7) de la surface.

3. Procédé selon l'une des revendications précédentes, dans lequel au cours de l'étape b), au moins un écran (10) aux micro-ondes est placé sur la deuxième partie (7) de la surface pour servir de moyen de limitation de la température.

4. Procédé selon l'une des revendications précédentes, dans lequel les étapes a) et b) sont exécutées sur plusieurs composants (1, 11) et dans lequel les composants (1, 11) subissent en outre au moins les étapes suivantes :
c) placement de plusieurs composants (1, 11) les uns par rapport aux autres de telle sorte que les deuxièmes parties (7) de leur surface forment au moins une zone (12) en superposition,
d) traitement de la ou des zones (12) en superposition par des micro-ondes (3).

5. Procédé selon la revendication 4, dans lequel une déformation d'au moins l'un des composants (1, 11) s'effectue au niveau d'une deuxième partie (7) de sa surface, au moins entre les étapes b) et c) ou pendant l'étape c).

6. Procédé selon les revendication 4 ou 5, dans lequel au cours de l'étape d), une liaison directe (13) en correspondance de matière est formée entre les différents composants (1, 11) dans la zone (12) en superposition.
